# EUROPEAN PATENT SPECIFICATION

(11) **EP 2 761 906 B1**
(45) Date of publication and mention of the grant of the patent: **17.06.2020**
(21) Application number: 12794761.2
(22) Date of filing: 21.09.2012
(51) Int. Cl.: H04W 8/26

(54) **METHODS AND APPARATUS OF DETERMINING ORTHOGONAL RESOURCE BASED ON VIRTUAL CELL ID IN COMP COMMUNICATION SYSTEM**
METHODEN UND GERÄTE ZUR BESTIMMUNG VON ORTHOGONALEN RESSOURCEN BASIEREND AUF EINER VIRTUELLEN ZELL-ID IN EINEM COMP KOMMUNIKATIONS-SYSTEM
PROCÉDÉS ET APPAREILS POUR DÉTERMINER DES RESSOURCES ORTHOGONALES À BASE D'UN ID DE CELLULE VIRTUELLE DANS UN SYSTÈME DE COMMUNICATION COMP

(30) Priority: 30.09.2011 CN 201110296400
(43) Date of publication of application: 06.08.2014
(73) Proprietor: Alcatel Lucent, 91620 Nozay (FR)
(72) Inventor: ZHU, Xudong, Shanghai 201206 (CN); LIU, Jin, Shanghai 201206 (CN); YANG, Yubo, Shanghai 201206 (CN)
(74) Representative: DREISS Patentanwälte PartG mbB
(86) International application number: PCT/IB2012/002170
(87) International publication number: WO 2013/046024

(56) References cited:
- US-A1- 2010 062 783
- PANASONIC: "Comparison of Orthogonal/Non-orthogonal CoMP transmission for PUCCH", 3GPP DRAFT; R1-092529, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050351034, [retrieved on 2009-06-23]
- PANASONIC: "Discussion on PUCCH coordination for UL CoMP", 17 March 2009 (2009-03-17), 3GPP DRAFT; R1-091165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050338786, [retrieved on 2009-03-17] the whole document
- PANASONIC: "Uplink enhancement for Rel.11", 3GPP DRAFT; R1-112367 UPLINK ENHANCEMENT FOR REL-11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537495, [retrieved on 2011-08-16]

## Description

### Field of the invention

The present disclosure relates to the field of wireless communications and particularly to a method of and apparatus for determining an orthogonal resource based on a virtual cell ID in a communication system based on Coordinated Multi-Point transmission/reception (CoMP).

### Background of the invention

There is an increased amount of information required to be fed back in the downlink, that is, there is an insufficient capacity of the uplink control channel, due to the introduction of downlink (DL) multi-point coordination technology to the LTE R11 system.

Firstly, compared to the existing network, channel information of a plurality of points is required to be fed back for multi-point coordination technology, while in the existing system channel information of only one point is required to be fed back, thus resulting in an increased demand for a feedback capacity. The introduction of CoMP and Heterogeneous Network (HTN) enables a larger number of user equipments to be supported in the same radio coverage area, so that there is a consequentially increased amount of feedback for Hybrid Automatic Repeat request (HARQ). Furthermore multi-point coordination technology can increase the capacity of data channel but can not increase the capacity of control channel because the modulation and encoding scheme of the control channel is fixed. Thus the improvement of channel quality fails to improve the channel capacity.

In the HTN network, the problem of channel interference can be addressed for the data channel due to multi-point coordination, but the performance of the control channel may be degraded greatly due to serious co-channel interference of a traditional single-point reception mode if this mode is still adopted for the control channel.

In CoMP scenario 4 (where a plurality of wireless reception points share a cell ID), a remote reception point can reuse part of orthogonal resources of the uplink control channel (PUCCH) for the gain of area splitting and the increased capacity of the uplink control channel.

In order to address the problem of the insufficient capacity of the uplink control channel due to the introduction of DL multi-point coordination technology to the LTE R11 system, two existing relevant technical solutions and their drawbacks are as follows:

In a first solution, orthogonal resources are allocated for user equipments in each macro cell or adjacent cell. This solution is suitable for use in the scenario 4 to thereby ensure the orthogonal resources for the respective user equipments. However the orthogonal resources may become insufficient because they have to be allocated for all the user equipments in the macro cell. This solution is not suitable for use in the scenario 3 because different cell IDs are adopted in respective cells to random a sequence, thus failing to ensure orthogonal resources to be allocated for user equipments in the different cells.

In a second solution, the user equipment is configured not to perform concurrent transmission over the control channel and the data channel such that information of the control channel will be incorporated onto the data channel for transmission, thus releasing part of the required capacity of the control channel. However, in the scenario with a large number of user equipments, the entire data channel is occupied by part of user equipments. Those user equipments for which the data channel is not allocated have to transmit over the control channel so that control information of other user equipments still have to compete for the limited control channel, thus restricting the capacity of the control channel.

3GPP DRAFT R1-092529, 3GPP, MOBILE COMPETENCE CENTR; 650, ROUTE DES LUCIOLES; F-06921 SOPHIA_ANTIPOLIS CEDEX; FRANCE, no. Los Angeles, USA; 20090623, 23 June 2009 (2009-06-23), discloses a comparison of orthogonal/non-orthogonal CoMP transmission for PUCCH.

### Summary of the invention

It is therefore desirable to provide a technical solution which is suitable for the CoMP communication system, e.g., the CoMP scenario 3 and the CoMP scenario 4, and can achieve a tradeoff between the number of orthogonal resources and interference intensity.

In view of the foregoing concern, in an embodiment of the invention, there is provided a method, in a reception point of a communication system, of providing a user equipment with a virtual cell ID, as defined by independent claim 1.

In a further embodiment of the invention, there is provided a method, in a user equipment of a communication system, of determining an orthogonal resource, the user equipment being served by a reception point, as defined by independent claim 2.

After a plurality of reception points are grouped into several clusters, for example according to location information and/or radio coverage areas of the plurality of reception points, wherein reception points in each cluster share a virtual cell ID, a virtual cell ID corresponding to each reception point among the plurality of reception points is transmitted respectively to the each reception point. Then each of these reception points provides its served user equipment with the corresponding virtual cell ID in the following method steps: the reception point firstly receives a virtual cell ID corresponding to the reception point from a network control device and further provides the virtual cell ID to at least one user equipment served by the reception point, and then transmits resource index information corresponding to each user equipment among the at least one user equipment respectively to the each user equipment. The served user equipment obtains the corresponding virtual cell ID and the corresponding resource index information thereof and then determines an orthogonal resource corresponding to the present user equipment according to the virtual cell ID and the resource index information and transmits uplink control information to the reception point over the determined orthogonal resource. At this point, the entire process of determining the orthogonal resource based on the virtual cell ID in a CoMP communication in the field of wireless communications has been finished.

The tradeoff between the number of orthogonal resources and interference intensity can be achieved in the methods according to the embodiments of the invention.

In another embodiment of the invention, there is provided an apparatus, in a reception point of a communication system, for providing a user equipment with a virtual cell ID as defined by independent claim 3.

In a further embodiment of the invention, there is provided an apparatus, in a user equipment of a communication system, for determining an orthogonal resource, the user equipment being served by a reception point, as defined by independent claim 4.

### Brief description of drawings

The foregoing and other features of the invention will become more apparent from the foregoing detailed description of embodiments illustrated with reference to the drawings in which identical reference numerals denote identical or like components:
Fig.1 illustrates a schematic diagram of grouping a plurality of reception points in a network control device of a communication system based on coordinated multi-point transmission according to an embodiment of the invention;
Fig.2 illustrates a flow chart of a method, in a reception point of a communication system based on coordinated multi-point transmission, of providing a user equipment with a virtual cell ID according to an embodiment of the invention; and
Fig.3 illustrates a flow chart of a method, in a user equipment of a communication system based on coordinated multi-point transmission, of determining an orthogonal resource according to an embodiment of the invention.

### Detailed description of embodiments

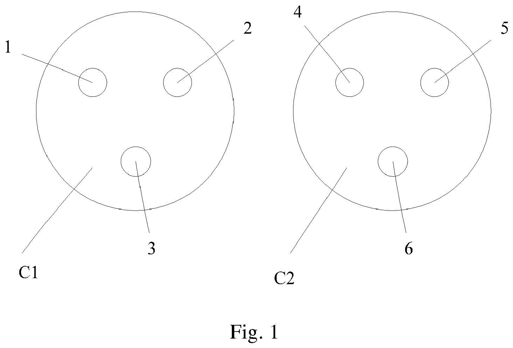

Fig.1 illustrates a schematic diagram of grouping a plurality of reception points in a network control device of a communication system based on coordinated multi-point transmission according to an embodiment of the invention.

In the figure, there are illustrated six reception points, i.e., a reception point 1, a reception point 2, a reception point 3, a reception point 4, a reception point 5 and a reception point 6, wherein the reception point 1, the reception point 2 and the reception point 3 are adjacent to each other in geographical location, and the reception point 4, the reception point 5 and the reception point 6 are adjacent to each other in geographical location. It shall be noted that the six reception points illustrated in Fig.1 are merely illustrative, and those skilled in the art can appreciate that the number of reception points can be any number in a practical application.

In the invention, the network control device firstly groups the six reception points, for example according to their location information and/or radio coverage areas, that is, groups the six reception points into several clusters according to geographical locations and/or radio coverage areas. For example, as illustrated in Fig.l, the network control device can group the reception point 1, the reception point 2 and the reception point 3 into a cluster C1 and the reception point 4, the reception point 5 and the reception point 6 into a cluster C2 according to mutual distances between the six reception points and/or radio coverage areas of the six reception points, wherein reception points in each cluster share a virtual cell ID.

The network control device transmits the virtual cell ID corresponding to each reception point among the six reception points respectively to the each reception point after grouping the six reception points into several clusters.

The following description will be given respectively from the perspective of a reception point in a cluster obtaining a virtual cell ID from a network control device and providing it to a user equipment and the perspective of a user equipment determining an orthogonal resource based on a virtual cell ID.

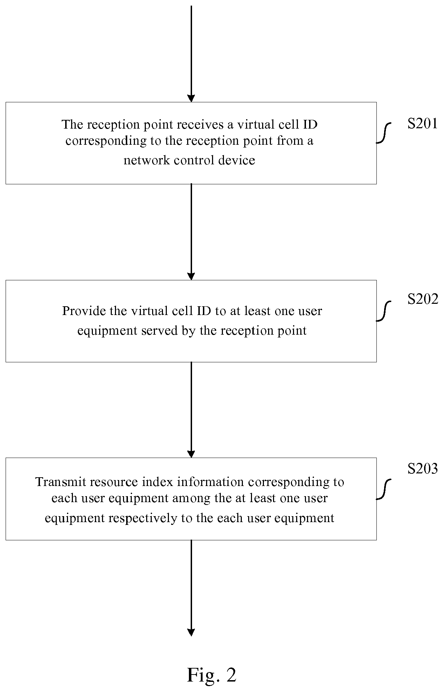

Fig.2 illustrates a flow chart of a method, in a reception point of a communication system based on coordinated multi-point transmission, of providing a user equipment with a virtual cell ID according to an embodiment of the invention. The flow includes steps S201, S202 and S203, wherein the reception point can be a cell, etc.

Firstly the reception point receives the virtual cell ID corresponding to the reception point from the network control device in the step S201.

Secondly the reception point provides the virtual cell ID to at least one user equipment served by the reception point in the step S202.

Specifically the reception point can provide the virtual cell ID to at least one user equipment served by the reception point in numerous ways.

For example, an RRC signaling can be newly defined in the invention. Then the reception point can provide the virtual cell ID to at least one user equipment served by the reception point via the RRC signaling.

In another example, a reference signal port-to-virtual cell ID mapping table can be stored at the user equipment side. The reference signal port-to-virtual cell ID mapping table can be one-to-one or multiple-to-one. After the reception point transmits to the user equipment the reference signal port information corresponding to the user equipment, the user equipment can search the stored port-to-virtual cell ID mapping table for the corresponding virtual cell ID according to the received reference signal port information. When the user equipment is allocated a plurality of reference signal ports, the user equipment can take the first one in the received sequence of reference signal ports as the reference value indicating the virtual cell ID and search the stored port-to-virtual cell ID mapping table for the corresponding virtual cell ID based on the reference value. It shall be noted that when the user equipment is allocated a plurality of reference signal ports, the user equipment can alternatively take any other one in the received sequence of reference signal ports as the reference value indicating the virtual cell ID, as agreed in advance. For example, it can be agreed in advance to take a second one in the received sequence of reference signal ports as the reference value indicating the virtual cell ID.

The extra signaling overhead can be saved by providing virtual cell ID information in this way.

Finally the reception point transmits resource index information corresponding to each user equipment among the at least one user equipment respectively to the each user equipment in the step S203.

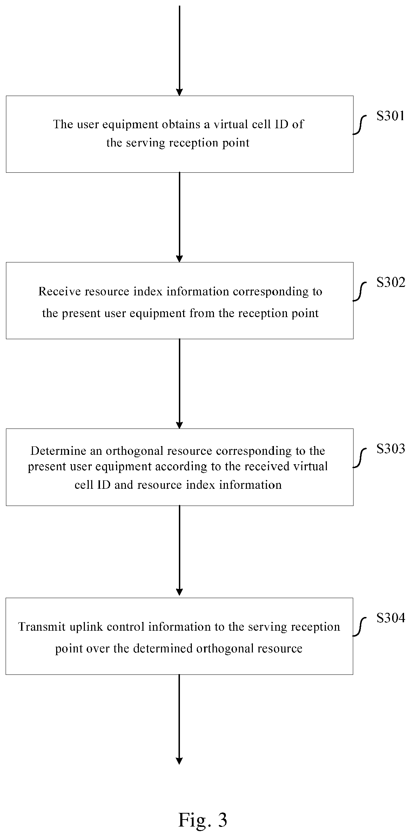

Fig.3 illustrates a flow chart of a method, in a user equipment of a communication system based on coordinated multi-point transmission, of determining an orthogonal resource according to an embodiment of the invention, where the user equipment is served by a reception point. The flow includes steps S301, S302, S303 and S304.

Firstly the user equipment obtains the virtual cell ID of the reception point in the step S301.

Again the user equipment can obtain the virtual cell ID of the reception point in numerous ways.

For example, the user equipment receives from the reception point the virtual cell ID transmitted via an RRC signaling as described in Fig.2.

In another example, a reference signal port-to-virtual cell ID mapping table can be stored at the user equipment side. The reference signal port-to-virtual cell ID mapping table can be one-to-one or multiple-to-one. After the reception point transmits to the user equipment the reference signal port information corresponding to the user equipment, the user equipment can search the stored port-to-virtual cell ID mapping table for the corresponding virtual cell ID according to the received reference signal port information. When the user equipment is allocated a plurality of reference signal ports, the user equipment can take the first one in the received sequence of reference signal ports as the reference value indicating the virtual cell ID and search the stored port-to-virtual cell ID mapping table for the corresponding virtual cell ID based on the reference value.

Then the user equipment receives resource index information corresponding to the present user equipment from the reception point in the step S302.

Next the user equipment determines an orthogonal resource corresponding to the present user equipment according to the obtained virtual cell ID and the received resource index information in the step S303.

Finally the user equipment transmits Uplink Control Information (UCI) to the reception point over the determined orthogonal resource in the step S304.

The technical solution of the invention has been described above from the perspective of methods and will be further described below from the perspective of apparatuses.

In an embodiment of the invention, there is provided an apparatus, in a network control device of a communication system based on coordinated multi-point transmission, for grouping a plurality of reception points. The apparatus comprises:
a grouping device configured to group the plurality of reception points into several clusters, wherein reception points in each cluster share a virtual cell ID; and
a first transmitting device configured to transmit a virtual cell ID corresponding to each reception point among the plurality of reception points respectively to the each reception point.

In another embodiment of the invention, there is provided an apparatus, in a reception point of a communication system, for providing a user equipment with a virtual cell ID. The apparatus comprises:
a first receiving device configured to receive a virtual cell ID corresponding to the reception point from a network control device, the virtual cell ID being used for indicating a cluster to which the reception point belongs;
a providing device configured to provide the virtual cell ID to at least one user equipment served by the reception point; and
a second transmitting device configured to transmit resource index information corresponding to each user equipment among the at least one user equipment respectively to the each user equipment.

In a further embodiment of the invention, there is provided an apparatus, in a user equipment of a communication system, for determining an orthogonal resource, the user equipment being served by a reception point. The apparatus comprises:
an obtaining device configured to obtain a virtual cell ID of the reception point;
a second receiving device configured to receive resource index information corresponding to the present user equipment from the reception point;
a determining device configured to determine an orthogonal resource corresponding to the present user equipment according to the virtual cell ID and the resource index information; and
a third transmitting device configured to transmit uplink control information to the reception point over the determined orthogonal resource.

Moreover the embodiments of the invention can be embodied in software, hardware or combination of software and hardware. The part of hardware can be embodied in a dedicated logic, and the part of software can be stored in a memory and performed by an appropriate instruction execution system, for example, a microprocessor or specially designed hardware. Those ordinarily skilled in the art can appreciate the foregoing methods and systems can be embodied in computer executable instructions and/or included in processor control codes, for example, such codes are carried in a carrier medium, e.g., a magnetic disk, a CD or a DVD-ROM, a programmable memory, e.g., a read only memory (firmware), or a data carrier, e.g., an optical or electronic signal carrier. The systems and the components thereof of the embodiments can be embodied in, for example, a very large scale integrated circuit or a gate array, a semiconductor, e.g., a logic chip, a transistor, etc., or a programmable hardware device, e.g., a field programmable gate array, a programmable logic device, etc., in software performed by variety of processor or in combination of the foregoing hardware circuit and software, e.g., in firmware.

## Claims

1. A method, in a reception point (1, 2, 3, 4, 5, 6) of a communication system, of providing a user equipment with a virtual cell ID, the method comprising the steps of:
receiving (S201) a virtual cell ID corresponding to the reception point from a network control device, the virtual cell ID being used for indicating a cluster to which the reception point belongs; providing (S202) the virtual cell ID to at least one user equipment served by the reception point; and transmitting (S203) resource index information corresponding to each user equipment among the at least one user equipment respectively to the each user equipment, **characterised in that** the step of providing (S202) the virtual cell ID comprises: transmitting reference signal port information corresponding to each user equipment among the at least one user equipment respectively to the each user equipment to be used for determining a virtual cell ID corresponding to the present user equipment from a port-to-virtual cell ID mapping table according to the reference signal port information.

2. A method, in a user equipment of a communication system, of determining an orthogonal resource, the user equipment being served by a reception point (1, 2, 3, 4, 5, 6), and the method comprising the steps of: obtaining (S301) a virtual cell ID of the reception point; receiving (S302) resource index information corresponding to the present user equipment from the reception point; determining (S303) an orthogonal resource corresponding to the present user equipment according to the virtual cell ID and the resource index information; and transmitting (S304) uplink control information to the reception point over the determined orthogonal resource, **characterised in that** the step of obtaining (S301) the virtual cell ID comprises:
receiving reference signal port information corresponding to the present user equipment from the reception point; and determining the virtual cell ID corresponding to the present user equipment from a port-to-virtual cell ID mapping table according to the reference signal port information.

3. An apparatus, in a reception point (1, 2, 3, 4, 5, 6) of a communication system, for providing a user equipment with a virtual cell ID, the apparatus comprising: a first receiving device configured to receive a virtual cell ID corresponding to the reception point from a network control device, the virtual cell ID being used for indicating a cluster (C1, C2) to which the reception point belongs; a providing device configured to provide the virtual cell ID to at least one user equipment served by the reception point; and a second transmitting device configured to transmit resource index information corresponding to each user equipment among the at least one user equipment respectively to the each user equipment, **characterised in that** the providing device is further configured to transmit reference signal port information corresponding to each user equipment among the at least one user equipment respectively to the each user equipment that can be used for determining a virtual cell ID corresponding to the present user equipment from a port-to-virtual cell ID mapping table according to the reference signal port information.

4. An apparatus, in a user equipment of a communication system, for determining an orthogonal resource, the user equipment being served by a reception point, and the apparatus comprising: an obtaining device configured to obtain (S301) a virtual cell ID of the reception point; a second receiving device configured to receive (S302) resource index information corresponding to the present user equipment from the reception point; a determining device configured to determine (S303) an orthogonal resource corresponding to the present user equipment according to the virtual cell ID and the resource index information; and a third transmitting device configured to transmit (S304) uplink control information to the reception point over the determined orthogonal resource, **characterised in that** the obtaining device is further configured: to receive reference signal port information corresponding to the present user equipment from the reception point; and to determine the virtual cell ID corresponding to the present user equipment from a port-to-virtual cell ID mapping table according to the reference signal port information.

## Patentansprüche

1. Verfahren, in einem Empfangspunkt (1, 2, 3, 4, 5, 6) eines Kommunikationssystems ein Benutzergerät mit einer virtuellen Zellen-ID zu versehen, wobei das Verfahren die folgenden Schritte umfasst: Empfangen (S201) einer virtuellen Zellen-ID entsprechend dem Empfangspunkt aus einer Netzwerksteuervorrichtung, wobei die virtuelle Zellen-ID dazu verwendet wird, einen Cluster anzugeben, zu dem der Empfangspunkt gehört; Bereitstellen (S202) der virtuellen Zellen-ID an mindestens ein Benutzergerät, das durch den Empfangspunkt bedient wird; und Senden (S203) von Ressourcenindexinformationen, die jedem Benutzergerät unter dem mindestens einen Benutzergerät entsprechen, jeweils an das jeweilige Benutzergerät, **dadurch gekennzeichnet, dass**
der Schritt des Bereitstellens (S202) der virtuellen Zellen-ID umfasst: Übertragen von Referenzsignalportinformationen, die jedem Benutzergerät unter dem mindestens einen Benutzergerät entsprechen, jeweils an das jeweilige Benutzergerät, um zum Bestimmen einer virtuellen Zellen-ID entsprechend dem aktuellen Benutzergerät aus einer Port-zu-virtueller-Zellen-ID-Zuordnungstabelle gemäß den Referenzsignalportinformationen verwendet zu werden.

2. Verfahren zum Bestimmen einer orthogonalen Ressource in einem Benutzergerät eines Kommunikationssystems, wobei das Benutzergerät durch einen Empfangspunkt (1, 2, 3, 4, 5, 6) bedient wird und das Verfahren die folgenden Schritte umfasst: Ermitteln (S301) einer virtuellen Zellen-ID des Empfangspunkts; Empfangen (S302) von Ressourcenindexinformationen entsprechend dem aktuellen Benutzergerät aus dem Empfangspunkt; Bestimmen (S303) einer orthogonalen Ressource entsprechend dem aktuellen Benutzergerät gemäß der virtuellen Zellen-ID und den Ressourcenindexinformationen; und Senden (S304) von Aufwärtsstreckensteuerinformationen an den Empfangspunkt über die bestimmte orthogonale Ressource, **dadurch gekennzeichnet, dass** der Schritt des Ermittelns (S301) der virtuellen Zellen-ID umfasst:
Empfangen von Referenzsignalportinformationen entsprechend dem aktuellen Benutzergerät aus dem Empfangspunkt;
und Bestimmen der virtuellen Zellen-ID entsprechend dem aktuellen Benutzergerät aus einer Port-zuvirtueller-Zellen-ID-Zuordnungstabelle gemäß den Referenzsignalportinformationen.

3. Vorrichtung in einem Empfangspunkt (1, 2, 3, 4, 5, 6) eines Kommunikationssystems zum Versehen eines Benutzergeräts mit einer virtuellen Zellen-ID, wobei die Vorrichtung umfasst: eine erste Empfangsvorrichtung, die dazu eingerichtet ist, eine virtuelle Zellen-ID entsprechend dem Empfangspunkt aus einer Netzwerksteuervorrichtung zu empfangen, wobei die virtuelle Zellen-ID zum Angeben eines Clusters (C1, C2) verwendet wird, zu dem der Empfangspunkt gehört; eine Bereitstellungsvorrichtung, die dazu eingerichtet ist, die virtuelle Zellen-ID mindestens einem Benutzergerät bereitzustellen, das durch den Empfangspunkt bedient wird; und eine zweite Übertragungsvorrichtung, die dazu eingerichtet ist, Ressourcenindexinformationen entsprechend jedem Benutzergerät unter dem mindestens einen Benutzergerät jeweils an das jeweilige Benutzergerät zu übertragen, **dadurch gekennzeichnet, dass**
die Bereitstellungsvorrichtung ferner dazu eingerichtet ist, Referenzsignalportinformationen, die jedem Benutzergerät unter dem mindestens einen Benutzergerät entsprechen, jeweils an das jeweilige Benutzergerät zu übertragen, die zum Bestimmen einer virtuellen Zellen-ID entsprechend dem aktuellen Benutzergerät aus einer Port-zu-virtueller-Zellen-ID-Zuordnungstabelle gemäß den Referenzsignalportinformationen verwendet werden können.

4. Vorrichtung in einem Benutzergerät eines Kommunikationssystems zum Bestimmen einer orthogonalen Ressource, wobei das Benutzergerät durch einen Empfangspunkt bedient wird und die Vorrichtung umfasst:
eine Ermittlungsvorrichtung, die dazu eingerichtet ist,
eine virtuelle Zellen-ID des Empfangspunkts zu ermitteln (S301); eine zweite Empfangsvorrichtung, die dazu eingerichtet ist, Ressourcenindexinformationen entsprechend dem aktuellen Benutzergerät aus dem Empfangspunkt zu empfangen (S302); eine Bestimmungsvorrichtung, die dazu eingerichtet ist, eine orthogonale Ressource entsprechend dem aktuellen Benutzergerät gemäß der virtuellen Zellen-ID und den Ressourcenindexinformationen zu bestimmen (S303); und
eine dritte Übertragungsvorrichtung, die dazu eingerichtet ist, Aufwärtsstreckensteuerinformationen über die bestimmte orthogonale Ressource an den Empfangspunkt zu übertragen (S304),
**dadurch gekennzeichnet, dass**
die Ermittlungsvorrichtung ferner dazu eingerichtet ist: Referenzsignalportinformationen entsprechend dem aktuellen Benutzergerät aus dem Empfangspunkt zu empfangen; und die virtuelle Zellen-ID entsprechend dem aktuellen Benutzergerät aus einer Portzu-virtueller-Zellen-ID-Zuordnungstabelle gemäß den Referenzsignalportinformationen zu bestimmen.

## Revendications

1. Procédé, dans un point de réception (1, 2, 3, 4, 5, 6) d'un système de communication, de fourniture d'un identificateur (ID) de cellule virtuelle à un équipement d'utilisateur, le procédé comprenant : la réception (S201) d'un ID de cellule virtuelle correspondant au point de réception à partir d'un dispositif de commande de réseau, l'ID de cellule virtuelle étant utilisé pour indiquer un groupe auquel le point de réception appartient; la fourniture (S202) de l'ID de cellule virtuelle à au moins un équipement d'utilisateur desservi par le point de réception; et la transmission (S203) d'informations d'index de ressources correspondant à chaque équipement d'utilisateur parmi l'au moins un équipement d'utilisateur respectivement à chaque équipement d'utilisateur,
**caractérisé en ce que**
l'étape de fourniture (S202) de l'ID de cellule virtuelle comprend : la transmission d'informations de port de signal de référence correspondant à chaque équipement d'utilisateur parmi l'au moins un équipement d'utilisateur respectivement à chaque équipement d'utilisateur pour être utilisées pour déterminer un ID de cellule virtuelle correspondant à l'équipement d'utilisateur actuel à partir d'une table de mappage port-ID de cellule virtuelle en fonction des informations de port de signal de référence.

2. Procédé, dans un équipement d'utilisateur d'un système de communication, de détermination d'une ressource orthogonale, l'équipement d'utilisateur étant desservi par un point de réception (1, 2, 3, 4, 5, 6), et le procédé comprenant : l'obtention (S301) d'un ID de cellule virtuelle du point de réception; la réception (S302) d'informations d'index de ressources correspondant à l'équipement d'utilisateur actuel à partir du point de réception; la détermination (S303) d'une ressource orthogonale correspondant à l'équipement d'utilisateur actuel en fonction de l'ID de cellule virtuelle et des informations d'index de ressources; et la transmission (S304) d'informations de commande de liaison montante au point de réception sur la ressource orthogonale déterminée,
**caractérisé en ce que**
l'étape d'obtention (S301) de l'ID de cellule virtuelle comprend : la réception d'informations de port de signal de référence correspondant à l'équipement d'utilisateur actuel à partir du point de réception; et la détermination de l'ID de cellule virtuelle correspondant à l'équipement d'utilisateur actuel à partir d'une table de mappage port-ID de cellule virtuelle en fonction des informations de port de signal de référence.

3. Appareil, dans un point de réception (1, 2, 3, 4, 5, 6) d'un système de communication, destiné à fournir un ID de cellule virtuelle à un équipement d'utilisateur, l'appareil comprenant : un premier dispositif de réception configuré pour recevoir un ID de cellule virtuelle correspondant au point de réception à partir d'un dispositif de commande de réseau, l'ID de cellule virtuelle étant utilisé pour indiquer un groupe (C1, C2) auquel le point de réception appartient; un dispositif de fourniture configuré pour fournir l'ID de cellule virtuelle à au moins un équipement d'utilisateur desservi par le point de réception; et un deuxième dispositif de transmission configuré pour transmettre des informations d'index de ressources correspondant à chaque équipement d'utilisateur parmi l'au moins un équipement d'utilisateur respectivement à chaque équipement d'utilisateur,
**caractérisé en ce que**
le dispositif de fourniture est en outre configuré pour transmettre des informations de port de signal de référence correspondant à chaque équipement d'utilisateur parmi l'au moins un équipement d'utilisateur respectivement à chaque équipement d'utilisateur qui peuvent être utilisées pour déterminer un ID de cellule virtuelle correspondant à l'équipement d'utilisateur actuel à partir d'une table de mappage port-ID de cellule virtuelle en fonction des informations de port de signal de référence.

4. Appareil, dans un équipement d'utilisateur d'un système de communication, pour déterminer une ressource orthogonale, l'équipement d'utilisateur étant desservi par un point de réception, et l'appareil comprenant : un dispositif d'obtention configuré pour obtenir (S301) un ID de cellule virtuelle du point de réception; un second dispositif de réception configuré pour recevoir (S302) des informations d'index de ressources correspondant à l'équipement d'utilisateur actuel à partir du point de réception; un dispositif de détermination configuré pour déterminer (S303) une ressource orthogonale correspondant à l'équipement d'utilisateur actuel en fonction de l'ID de cellule virtuelle et des informations d'index de ressources; et un troisième dispositif de transmission configuré pour transmettre des informations de commande de liaison montante (S304) au point de réception sur la ressource orthogonale déterminée,
**caractérisé en ce que**
le dispositif d'obtention est en outre configuré : pour recevoir des informations de port de signal de référence correspondant à l'équipement d'utilisateur actuel à partir du point de réception; et pour déterminer l'ID de cellule virtuelle correspondant à l'équipement d'utilisateur actuel à partir d'une table de mappage port-ID de cellule virtuelle en fonction des informations de port de signal de référence.
